# EUROPÄISCHE PATENTANMELDUNG

(11) **EP 0 655 875 A1**
(43) Veröffentlichungstag der Anmeldung: **31.05.1995**
(21) Anmeldenummer: 94114068.3
(22) Anmeldetag: 08.09.1994
(51) Int. Cl.: H04Q 11/04, H04M 11/06

(54) **Adapter zur Erweiterung von ISDN-Telefonen**

(30) Priorität: 28.10.1993 DE 9316472 U
(71) Anmelder: KRONE Aktiengesellschaft, D-14160 Berlin-Zehlendorf (DE)
(72) Erfinder: Gotzmann, Andreas, Dipl.-Ing., D-12357 Berlin (DE)

(57) **Zusammenfassung**

Die Erfindung bezieht sich auf einen Adapter zur Erweiterung von ISDN-Telefonen mit vorhandener Schnittstelle für Zusatzgeräte (AEI-Schnittstelle).

Die Aufgabe der Erfindung, einen Adapter der gattungsgemäßen Art zu entwickekn, mit dem auf preiswerte Art analoge Endgeräte an das ISDN angeschlossen werden können und der sowohl bei der Impulswahlverfahren-Signalisierung (IWV) als auch bei der Mehrfrequenzwahlverfahren-Signalislerung (MFV) eingesetzt werden kann, wird dadurch gelöst, daß die analoge a/b-Schnittstelle 3 auf den analogen Teil der AEI-Schnittstelle 6.1 umgesetzt ist und umgekehrt.

## Beschreibung

Die Erfindung bezieht sich auf einen Adapter zur Erweiterung von ISDN-Telefonen mit einer Schnittstelle für Zusatzgeräte (Auxillary Equipment Interface-(AEI-) Schnittstelle) um eine Analogschnittstelle zum Betrieb von analogen Endgeräten, wie Analog-Telefon, Modem, Telefaxgeräte und dgl.im ISDN.

Die Verbindung vorhandener analoger Endgeräte mit dem ISDN ist mittels teurer Terminaladapter über die ISDN-Basis-Schnittstelle SO bekannt. Diese Terminaladapter weisen eine analoge a/b-Schnittstelle auf, an die, wie an einem herkömmlichen Wählanschluß des Telefonnetzes,
- Zusatzeinrichtungen des Telefondienstes, die für das analoge Netz entwickelt wurden,
- Datenendeinrichtungen mit den üblichen Modems,
- Bildschirmtextendgeräte mit der heute üblichen Technik und
- Telefaxendgeräte der Gruppen 2 und 3 betrieben werden können.

Der Terminaladapter führt dabei u.a. folgende Funktionen aus:
- SO-Schnittstellenanpassung,
- a/b-Schnittstellenanpassung, d.h. Speisung der a/b-Schnittstelle, Signalisierung auf a/b, Ruferzeugung usw.,
- Steuern von SO- und a/b-Schnittstellenanpassungen, Bearbeiten, Umsetzen,
- A/D-Wandlung, d.h. Umsetzen des analogen a/b-Kanals in den 64 kbit/s-B-Kanal.
(ISDN: das neue Fernmeldenetz der Deutschen Bundespost, 3.,völlig neubearb. und erw. Auflage; Heidelberg: v.Decker,1990, Seiten 413 ff.)

Nachteilig ist bei den bekannten Terminaladaptern der hohe Preis infolge der Bestückung mit Funktionsblöcken, die zum Teil bereits in den anzuschließenden Geräten vorhanden sind. Der Preis dieser Terminaladapter steht in einem sehr ungünstigen Verhältnis zum erzielbaren Nutzen durch den Anschluß von veralteten vorhandenen Endgeräten an das ISDN.

Der Erfindung liegt von daher die Aufgabe zugrunde, einen Adapter der gattungsgemäßen Art zu entwickeln, mit dem auf preiswerte Art analoge Endgeräte an das ISDN angeschlossen werden können und der sowohl bei der Impulswahlverfahren-Signalisierung (IWV) als auch bei der Mehrfrequenzwahlverfahren-Signalisierung (MFV) eingesetzt werden kann.

Die Lösung dieser Aufgabe ergibt sich aus den kennzeichnenden Merkmalen des Anspruches 1.

Der Adapter ermöglicht eine preiswerte Nutzung analoger Endgeräte über ein vorhandenes ISDN-Telefon. Der Adapter ist netzgespeist und wird im Gegensatz zu den bekannten Terminaladaptern über die vorhandene Zusatzgeräteschnittstelle (X- bzw. AEI- Schnittstelle) an das ISDN-Telefon angeschlossen. Der Adapter erkennt selbständig, welches Protokoll das Telefon verwendet, er ist daher sowohl für die bereits am Markt vorhandenen wie auch für künftige Telefone verwendbar, wenn diese eine Schnittstelle für Zusatzgeräte (AEI-Schnittstelle) aufweisen. Der Adapter ist so aufgebaut, daß die zu erfüllenden Aufgaben in Arbeitsteilung mit den in den Endgeräten und im ISDN-Telefon vorhandenen Baugruppen erfüllt werden.

Die Erfindung ist nachfolgend anhand eines in den Zeichnungen dargestellten Ausführungsbeispieles für den Anschluß eines Adapters näher erläutert. Es zeigen:
- Fig. 1: die schematische Darstellung des Anschlusses eines Adapters an die vorhandenen Schnittstellen und
- Fig. 2: ein Blockschaltbild des Adapters.

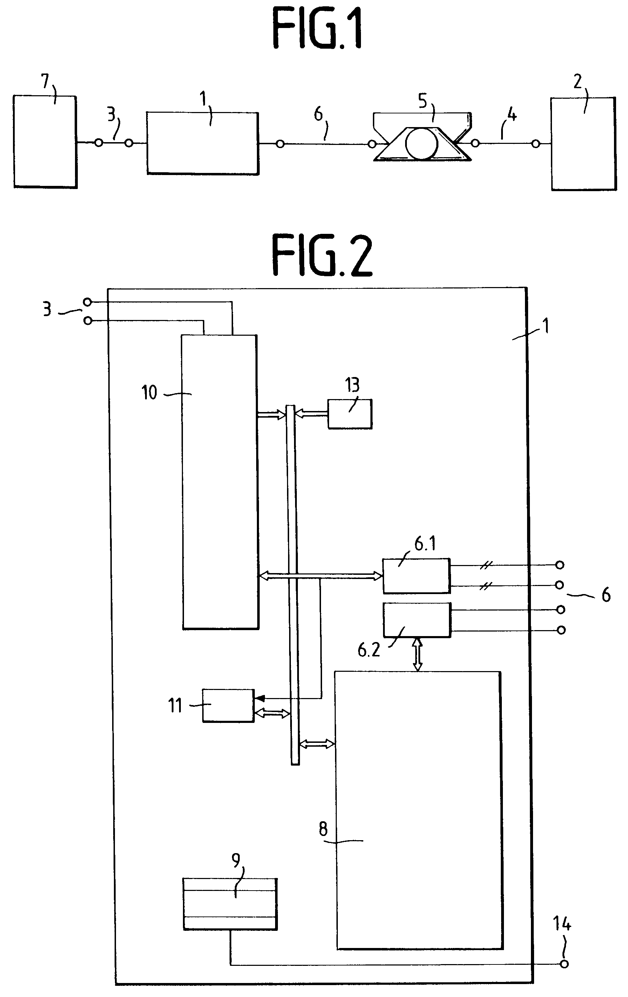

Entsprechend der Darstellung in der Fig. 1 setzt der Adapter 1 die ISDN-Signalisierungs- und Übertragungstechnik der (ISDN)-Vermittlungsstelle 2 auf die analoge a/b- Schnittstelle 3 um und umgekehrt (ISDN=Diensteintegrierendes digitales Fernmeldenetz). Die Signalisierung aus der ISDN-Vermittlungsstelle 2 geht über die SO/UK0-Schnittstelle 4 (Teilnehmerschnittstelle / Leitungsschnittstelle des ISDN-Basisanschlusses ) und die AEI- bzw. X-Schnittstelle 6 des ISDN-Telefons 5 an den Adapter 1 und von dort über die a/b-Schnittstelle 3 an ein dort angeschlossenes analoges Endgerät 7, z.B. ein G3-Faxgerät, ein Analog-Telefon oder ein Modem und dgl.

Der Adapter 1 hat somit die Aufgabe, die zweidrähtige analoge a/b-Schnittstelle 3 auf den abgehenden und ankommenden analogen Teil der AEI-Schnittstelle 6 umzuwandeln. Hierbei wird die von der a/b-Schnittstelle 3 empfangene IWV- oder MFV-Signalisierung (Impulswahlverfahren- oder Mehrfrequenzwahlverfahren-Signalisierung) über den digitalen Teil der AEI-Schnittstelle 6 dem ISDN-Telefon 5 mitgeteilt und die über diesen Teil empfangenen Meldungen in eine entsprechende Signalisierung der S0/UK0-Schnittstelle 4 umgesetzt. Das Zusammenwirken zwischen dem ISDM-Telefon 5 und dem Adapter 1 wird ebenfalls über den digitalen Teil der AEI-Schnittstelle 6 des Telefons 5 gesteuert.

Aus der Darstellung in der Fig. 2 ist ersichtlich, daß die AEI-Schnittstelle 6 aus der analogen Signalisierungs-Schnittstelle 6.1 in Vier-Draht-Ausführung (1TR6-Protokoll) oder Drei-Draht-Ausführung (ETSI-Protokoll) und aus der digitalen Übertragungs-Schnittstelle 6.2 in Vier-Draht-Ausführung (1TR6-Protokoll) oder Drei-Draht-Ausführung (ETSI-Protokoll) gebildet ist. Beim Einsatz des Adapters 1 in Anlagen, in denen das Impulswahlverfahren (IWV) angewendet wird, ermittelt ein Mikrorechner 8 die vom analogen Gerät 7 ankommende Signalisierungsinformation durch Zugriff auf den Vier-Draht/Zwei-Draht-Wandler 10. Bei der Anwendung des Mehrfrequenzwahlverfahrens (MFV) erfolgt der Signalisierungsaustausch mittels einer Baugruppe 11 zur Mehrfrequenzverfahren-Signalisierung, die ebenfalls mit dem Vier-Draht- /Zwei-Draht-Wandler 10 kommuniziert. Ein ankommender Ruf wird durch die Signalisierungs-Schnittstelle 6.1 erkannt, worauf der Rufton aus einem Ruftonerzeuger 13 dem Vier-Draht/Zwei-Draht-Wandler 10 zugeführt wird. Nach Annahme des Rufes wird der Rufton abgeschaltet und die anschließende Kommunikation erfolgt über die analoge Übertragungs-Schnittstelle 6.1 und die a/b-Schnittstelle 3.

Die Spannungsversorgung aller Baugruppen bzw. die erforderlichen Betriebsspannungen werden durch ein Netzteil 9, welches mit einer 220 V/110 V-Wechselspannungsquelle 14 verbunden ist, gewährleistet. Die Schnittstelle 3 ist über TAE/WE-Buchsen, die Schnittstellen 6.1,6.2 sind über einen Stecker zugänglich. Die a/b-Schnittstelle 3 ist galvanisch von der AEI-Schnittstelle 6 getrennt.

### BEZUGSZEICHEHLISTE

- 1: Adapter
- 2: ISDN-Vermittlungsstelle
- 3: a/b-Schnittstelle
- 4: SO/UKO-Schnittstelle
- 5: ISDM-Telefon
- 6: AEI-Schnittstelle
- 6.1: Signalisierungs-Schnittstelle (Vier-Draht)
- 6.2: Übertragungs-Schnittstelle (Zwei-Draht)
- 7: Endgerät
- 8: Mikrorechner
- 9: Netzteil
- 10: Vier-Draht-/Zwei-Draht-Wandler
- 11: Baugruppe für Mehrfrequenzverfahren-Signalisierung
- 12:
- 13: Rufton-Erzeuger
- 14: 220 V/110 V-Wechselspannungsquelle

## Patentansprüche

1. Adapter zur Erweiterung von ISDN-Telefonen mit vorhandener Schnittstelle für Zusatzgeräte (AEI-Schnittstelle),
**dadurch gekennzeichnet,**
daß die analoge a/b-Schnittstelle (3) auf den analogen Teil der AEI-Schnittstelle (6.1) umgesetzt ist und umgekehrt.

2. Adapter nach Anspruch 1, dadurch gekennzeichnet, daß der Adapter (1) an die AEI-Schnittstelle (6) des ISDN-Telefons (5) angeschlossen ist.
